# EUROPÄISCHE PATENTSCHRIFT

(11) **EP 2 693 280 B1**
(45) Veröffentlichungstag und Bekanntmachung des Hinweises auf die Patenterteilung: **20.12.2017**
(21) Anmeldenummer: 12005607.2
(22) Anmeldetag: 01.08.2012
(51) Int. Cl.: G05B 19/042

(54) **Straßenbaumaschine mit Messsystem und Messverfahren**
Street construction machine with measuring system and measuring method
Machine de construction de routes avec un système de mesure et procédé de mesure

(43) Veröffentlichungstag der Anmeldung: 05.02.2014
(73) Patentinhaber: Joseph Vögele AG, 67067 Ludwigshafen (DE)
(72) Erfinder: Eul, Achim, 68305 Mannheim (DE)
(74) Vertreter: Grünecker Patent- und Rechtsanwälte PartG mbB

(56) Entgegenhaltungen:
- EP-A1- 1 284 556
- EP-A2- 2 654 246
- DE-A1-102008 044 777
- DE-B3-102007 028 926
- JP-A- 2009 118 155
- US-A1- 2006 020 377

## Beschreibung

Die vorliegende Erfindung betrifft eine Straßenbaumaschine mit den Merkmalen des Anspruchs 1 sowie ein Verfahren mit den Merkmalen des Anspruchs 15.

Ein bekanntes Messsystem, welches an einer Straßenbaumaschine zur Schichtdickenmessung eingesetzt wird, umfasst eine Steuereinheit, die über einen Feldbus jeweils mit mehreren, vorzugsweise drei Höhenmesssensoren verbunden ist. Dazu ist an der Steuereinheit für jeden der drei Sensoren jeweils eine Anschlußdose vorgesehen, die mit dem entsprechenden Sensor jeweils über ein Bussystem verbunden ist.

Ebenfalls ist der Einsatz einer Mehrfachsteckerleiste bekannt, die in der Steuereinheit integriert oder mit dieser funktional verbunden ist. Die Steckerleiste bietet für jeden der Sensoren einen Steckerplatz. Jeder Steckerplatz ist für die spezifische Verwendung mit genau einem Sensortypen ausgebildet, wobei die Sensoren jeweils über einen Feldbus an den Steckerplätzen angeschlossen werden können. Problematisch dabei ist allerdings, dass durch den Gebrauch mehrerer Sensoren ebenfalls mehrere Feldbuskabel gebraucht werden, wodurch es zu erhöhten Kosten kommt und eine komplizierte Verkabelung entsteht.

Obwohl die in der Steckerleiste der Steuereinheit vorgesehenen Steckerplätze nicht alle besetzt sein müssen, können sie jedoch nicht beliebig besetzt werden. Folglich müssen für den Einsatz unterschiedlicher Sensoren, beziehungsweise unterschiedlicher Kombinationen von Sensoren, stets auch daran speziell angepasste Steckerleisten eingesetzt werden, um eine funktionale Kommunikation zwischen den Sensoren und der Steuereinheit des Messsystems zu ermöglichen. Dies führt zu einem unerwünscht hohen Herstellungsaufwand. Außerdem ist das bekannte Messsystem wegen der individuell angepassten Steckerleisten nicht flexibel einsetzbar.

Hinzu kommt, dass bei dem bekannten Messsystem eine Adressierung der verwendeten Sensoren starr vorgegeben ist, weil die jeweiligen Sensoren eben nur in dem dazugehörenden Steckerplatz funktionieren. Dadurch sind die Einsatzmöglichkeiten des bekannten Messsystems eher beschränkt.

EP 1 284 556 A1, US 2006/020377 A1, DE 10 2007 028 926 B3, JP 2009 118 155 A und DE 10 2008 044 777 A1 offenbaren jeweils dasselbe technische Prinzip zur Adressvergabe an Feldgeräte, die in Reihe mit einer Steuereinheit verbunden sind. Dabei werden an die in Reihe geschalteten Feldgeräte der Reihe nach abnehmende Spannungsgrößen als Spannungseingangssignal angelegt, worauf basierend eine individuelle Adresse den jeweiligen Feldgeräten zugeordnet werden kann. Nachteilig daran kann sein, dass die Anzahl der teilzunehmenden Feldgeräte von der Ausgangsspannung der Steuereinheit abhängt, sodass das Messsystem nicht beliebig erweiterbar ist.

Die nachveröffentlichte EP 2 654 246 A2 offenbart ein Kommunikationsnetzwerk für den automotiven Einsatz, dessen Teilnehmer automatisch adressierbar sind.

Ausgehend von dem zuvor beschriebenen Stand der Technik liegt der Erfindung die Aufgabe zugrunde, eine Straßenbaumaschine mit einem Messsystem zur Verfügung zu stellen sowie ein Verfahren mittels einfacher, konstruktiver technischer Merkmale dahingehend zu verbessern, dass es mit einer beliebigen Anzahl unterschiedlicher Feldgeräte kombinierbar ist, sowie eine anpassungsfähige und zuverlässige Adressierung der einzelnen Feldgeräte innerhalb des Messsystems beziehungsweise durch das Messverfahren gewährleistet.

Diese Aufgabe wird durch die Merkmale des Anspruchs 1 beziehungsweise durch die Merkmale des Anspruchs 15 gelöst. Verbesserte Weiterbildungen der Erfindung sind durch die Merkmale der Unteransprüche gegeben.

Die Erfindung betrifft eine Straßenbaumaschine, insbesondere einen Straßenfertiger, mit einem Messsystem Das Messsystem umfasst eine Steuereinheit, die mittels eines Feldbusses mit zumindest einem Feldgerät funktional verbunden ist. Das Feldgerät umfasst einen Spannungseingang und einen Spannungsausgang, wobei von der Steuereinheit über den Feldbus ein Spannungseingangssignal an den Spannungseingang des Feldgeräts sendbar ist.

Erfindungsgemäß ist vorgesehen, dass basierend auf einer Größe des Spannungseingangssignals eine exklusive Busadresse dem Feldgerät zuteilbar ist. Dabei ist das Feldgerät dazu ausgebildet, aus dem Spannungseingangssignal ein um eine Offset-Spannung differierendes Spannungsausgangssignal zu erzeugen, das vom Spannungsausgang des Feldgeräts über den Feldbus an einen Spannungseingang eines weiteren Feldgeräts sendbar ist, sodass basierend auf dem vom Feldgerät ausgegebenen Spannungsausgangssignal für das weitere Feldgerät eine andere exklusive Busadresse im Messsystem vergebbar ist.

Anhand der Erfindung ist es möglich, das Messsystem um beliebig viele Feldgeräte, beispielsweise Sensoren oder Aktuatoren, zu erweitern, wobei eine Adressierung der im Messsystem angeschlossenen Feldgeräte auf einfache Weise selbst durch die angeschlossenen Feldgeräte durchführbar ist.

Bei der Erfindung sind die jeweiligen im Messsystem angeschlossenen Feldgeräte dazu konfiguriert, ihre individuelle Adresse aufgrund des am jeweiligen Spannungseingang anliegenden Spannungspegels zu erkennen sowie eine zyklische CAN-Nachricht zu generieren, welche über den Feldbus an die Steuereinheit sendbar ist. Für die Steuereinheit
lässt sich anhand der jeweiligen CAN-Nachrichten deren Kennung (CAN-Identifier) aus der jeweiligen Feldgeräteadresse bestimmen (Heardbeat). Ebenfalls ist es möglich, dass sich mittels der jeweiligen CAN-Nachrichten und den darin enthaltenden Nutzdaten die jeweilige Sensortype durch die Steuereinheit bestimmen lässt. Wenn beispielsweise mehrere Sensoren vom Typ "Ultraschall Nivelliersensor" vorhanden sind und an der Steuereinheit beispielsweise die Betriebsart "Big-ski" aktiviert ist, ergibt sich die Anbauposition der Sensoren anhand der Reihenfolge der Verkabelung, also durch die Adressreihenfolge.

Aufgrund der Adressierung ist es auch möglich, dass weitere CAN-Identifier errechenbar sind und zum Senden weiterer Nachrichten verwendet werden können, in denen jeweils Messdaten der angeschlossenen Feldgeräte übertragbar sind.

Bei der Erfindung ist jedes der im Messsystem angeschlossenen Feldgeräte selbst dazu in der Lage, mittels eines am Spannungseingang anliegenden Spannungspegels, welcher zwischen den Feldgeräten um ein Vielfaches der Offsetspannung differiert, für sich selbst eine Adressierung im Messsystem durchzuführen, sodass eine fehlerfreie, zügige Kommunikation der jeweiligen Feldgeräte mit der Steuereinheit möglich ist. Ein im Messsystem funktional verbundenes Feldgerät ist also derart ausgebildet, dass es sich selbst eine Busadresse zuteilt.

Beispielsweise hat sich ein über den Feldbus direkt mit der Steuereinheit verbundenes Feldgerät basierend auf einem von der Steuereinheit übertragenen Spannungseingangssignal die Busadresse 1 gegeben. Wenn das Feldgerät über den Feldbus an die Steuereinheit angeschlossen ist, liegt am Spannungseingang des Feldgeräts beispielsweise ein Spannungseingangssignal von 0,5 Volt an. Das Feldgerät generiert aus diesem Spannungseingangssignal durch eine Offset-Spannung von vorzugsweise 0,5 Volt ein Spannungsausgangssignal von respektive 1,0 Volt. Während sich das Feldgerät, bei welchem das Spannungseingangssignal 0,5 Volt beträgt, darauf basierend die Busadresse 1 gibt, bestimmt das andere Feldgerät seine Busadresse, beispielsweise die Busadresse 2, basierend auf dem nun geänderten Spannungseingangssignal von 1,0 Volt. Eine Adressierung weiterer Feldgeräte kann auf diese Weise fortgesetzt werden. Das Messsystem kann also beliebig um weitere Feldgeräte erweitert werden.

Vorzugsweise entspricht der Wert des Spannungseingangssignals, das von der Steuereinheit an das Feldgerät übertragen wird, dem Wert der Offsetspannung. Beispielsweise betragen das Spannungseingangssignal sowie die Offsetspannung jeweils, wie oben beschrieben, 0,5 Volt. Alternativ dazu können das Spannungseingangssignal sowie die Offsetspannung jeweils ein Vielfaches von 0,1 Volt betragen. Dadurch ist es möglich, die Busadresse des jeweiligen Feldgeräts allgemein mittels des Quotienten aus dem am jeweiligen Feldgerät anliegenden Spannungseingangssignal und der Offsetspannung zu errechnen (Busadresse = Spannungseingangssignal am jeweiligen Feldgerät (V) / Offsetspannung (V)). Außerdem ist es gemäß dieser Ausführungsform möglich, eine ganzzahlige Adressierung beginnend von 1 durchzuführen.

Beispielsweise würde sich ein Feldgerät, das an zwei bereits in Reihe geschaltete Feldgeräte (erstes Feldgerät hat Busadresse 1 und zweites Feldgerät hat Busadresse 2) angeschlossen wird, bei einem von der Steuereinheit ausgegebenen ursprünglichen Spannungseingangssignal von 0,3 Volt, welche vom ersten Feldgerät auf 0,6 Volt und vom zweiten Feldgerät auf 0,9 Volt jeweils durch die entsprechende Offsetspannung von 0,3 Volt erhöht wird, die Busadresse 3 geben, weil es als nunmehr drittes in Reihe geschaltetes Feldgerät das Spannungseingangssignal 0,9 Volt erhält und die Offsetspannung 0,3 beträgt. Der Quotient daraus beträgt also 3, was der Busadresse entspricht.

Alternativ dazu wäre es jedoch auch möglich, dass das von der Steuereinheit ausgegebene Spannungseingangssignal und die Offsetspannung unterschiedliche Werte umfassen. Bei einem ursprünglichen Spannungseingangssignal von 0,5 Volt und einer ausgewählten Offsetspannung von 0,1 Volt bekäme das direkt mit der Steuereinheit verbundene Feldgerät die Busadresse 5, das anschließende die Busadresse 6, usw. Dadurch kann der Energieverbrauch des Messsystems beliebig angepasst und verbessert werden.

Vorzugsweise ist der Spannungseingang ein analoger Spannungseingang mit einem Wertebereich von 0 bis 20 Volt. Beginnend bei einem Spannungseingangssignal von 0,5 Volt und bei einer stufenweisen Vergrößerung des Spannungseingangssignals um jeweils 0,5 Volt Offset-Spannung wäre es möglich, bis zu 40 Feldgeräte im Messsystem zu adressieren. Der Spannungseingang ist vorzugsweise ein A/D-Wandler. Dieser ermöglicht eine Umwandlung des analogen Spannungseingangssignals in ein digitales Spannungssignal, welches gut mittels der Offset-Spannung in das Spannungsausgangssignal weiterverarbeitet werden kann.

Allerdings ist es auch vorstellbar, dass der analoge Spannungseingang der jeweiligen im Messsystem befindlichen Feldgeräte mit einem noch größeren Wertebereich ausgebildet ist, als der oben erwähnte, beispielsweise mit einem Wertebereich von 0 bis 50 Volt. Dies ist vor allem dann vorteilhaft, wenn das Feldgerät in Kombination mit einer großen Vielzahl anderer Feldgeräte in einem komplexen Messsystem gemäß der Erfindung zum Einsatz kommen soll.

Vorzugsweise verfügt der Spannungsausgang einen analogen Spannungsausgang mit einem Wertebereich von 0 bis 20 Volt. Wie bereits zuvor beschrieben wurde, kann dieser Wertebereich beliebig erweitert werden, sodass unterschiedlich komplexe Meßsysteme gemäß der Erfindung herstellbar sind. Der Spannungsausgang umfasst gemäß einer weiteren Ausführung einen D/A-Wandler. Dieser kann das mittels der Offset-Spannung erzeugte Spannungsausgangssignal analogisieren, sodass es gut an einen Spannungseingang eines anschließend im Feldbus angeschlossenen Feldgeräts sendbar ist.

Für eine präzise Adressierung der jeweiligen Feldgeräte innerhalb des erfindungsgemäßen Messsystems ist es vorteilhaft, wenn die Offset-Spannung ein ganzzahliges Vielfaches von 0,1 Volt, vornehmlich 0,5 Volt beträgt. Mit 0,5 Volt als Offsetspannung ließe sich also bei einer Adressierung von beispielsweise drei Feldgeräten, die über den Feldbus in Reihe mit der Steuereinheit funktional verbunden sind, und bei einem anliegenden Spannungseingangssignal von 0,5 Volt am Spannungseingang des ersten Feldgeräts eine stufenweise Vergrößerung des Spannungseingangssignals um 0,5 Volt an den jeweiligen Spannungseingängen der Feldgeräte erzeugen. Am Spannungseingang des zweiten Feldgeräts liegt also gemäß diesem Beispiel ein Spannungseingangssignal von 1 Volt und beim Spannungseingang des dritten Feldgeräts ein Spannungseingangssignal von 1,5 Volt an. Mit einer Offsetspannung von 0,5 Volt können sich die jeweiligen Feldgeräte eindeutig eine Busadresse zuteilen.

Gemäß einer weiteren Ausführungsform der Erfindung ist vorgesehen, dass eine Vergabe einer jeweiligen exklusiven Busadresse für die am Messsystem angeschlossenen Feldgeräte automatisch stattfindet. Dabei kann ein neu an das Messsystem angeschlossenes Feldgerät automatisch eine Busadresse für sich erzeugen, die noch nicht an ein anderes Feldgerät im Messsystem vergeben ist. Dadurch ist es möglich, auf besonders einfache Art und Weise eine funktionale Kommunikation zwischen der Steuereinheit und den angeschlossenen Feldgeräten herzustellen. Durch die automatische Busadressierung lässt sich das erfindungsgemäße Messsystem einfach durch das Bedienpersonal erweitern.

Vorzugsweise ist vorgesehen, dass durch Anschließen eines jeden weiteren Feldgerätes an dem Feldbus automatisch dem neu angeschlossenen Feldgerät eine exklusive Busadresse zuteilbar ist. Daher muss sich ein Bediener nicht mehr darum kümmern, dass ein speziell für das Feldgerät vorgesehener Steckplatz zur Verfügung steht. Vielmehr ist es dadurch möglich, das Messsystem beliebig durch Hinzufügung weiterer Feldgeräte funktional zu erweitern.

Besonders flexibel ist das Messsystem dann einsetzbar, wenn der Feldbus mindestens teilweise als fliegende Verkabelung, vorzugsweise als Wendelkabel, ausgebildet ist. Dadurch ist das Messsystem besonders flexibel an der Straßenbaumaschine einsetzbar und kann an dieser an unterschiedlichen Stellen leicht befestigt werden.

Vorzugsweise ist der Feldbus ein digitaler Feldbus, wodurch eine gute Kommunikation zwischen der Steuereinheit und den damit verbunden Feldgeräten einrichtbar ist. Vornehmlich ist der Feldbus ein CAN-Bus-System, womit sich besonders schnell eine Kommunikation zwischen den Feldgeräten und der Steuereinheit aufbauen lässt.

Um das Messsystem an unterschiedliche Einsatzbedingungen anzupassen, ist vorzugsweise vorgesehen, dass mehrere Feldgeräte lösbar mit dem Feldbus verbunden werden können. Dadurch ist es möglich, dass die Feldgeräte problemlos austauschbar sind und insbesondere bei einem vorliegenden Defekt durch andere Feldgeräte ersetzt werden können. Durch die Austauschbarkeit der Feldgeräte ist es auch einfach möglich, das Messsystem in seiner Funktionalität beziehungsweise in seiner Komplexität beliebig zu ändern, um es an unterschiedliche Messanforderungen anzupassen.

Ein besonders schneller Datentransfer zwischen den Feldgeräten und der Steuereinheit ist dann möglich, wenn mehrere Feldgeräte in Reihe mittels des Feldbusses funktional mit der Steuereinheit verbunden sind. Mittels einer reihenartigen Verkettung der Feldgeräte durch den Feldbus ist es insbesondere auch für das Bedienpersonal möglich, leicht eine Übersicht über den Zusammenbau des Messsystems zu bewahren, was zu einer verbesserten Bedienbarkeit des Messsystems beiträgt.

Eine besonders einfache Handhabe besteht dadurch, dass das Feldgerät vorzugsweise jeweils mittels eines Y-Verteilers an den Feldbus angeschlossen ist. Mittels des Y-Verteilers ist es möglich, ein Feldgerät schnell und einfach im Messsystem funktional anzuschließen beziehungsweise dieses vom Messsystem zu entfernen.

Selbst wenn ein Feldgerät sowie der daran befestigte Y-Verteiler aus einer Kette von an den Feldbus angeschlossenen Feldgeräten entfernt werden, kann die entstandene Lücke problemlos durch den Feldbus geschlossen werden, indem die freiwerdenden Endabschnitte des Feldbusses einfach zusammengesteckt werden. Daraus resultierend ist es möglich, dass die Feldgeräte eine neue Adressierung durchführen, um das herausgenommene Feldgerät zu kompensieren.

Alternativ zu einer Verbindung des oder der jeweiligen Feldgeräte mittels eines Y-Verteilers an den Feldbus kann vorgesehen sein, dass das Feldgerät jeweils einen Eingangsstecker zum Empfangen des Spannungseingangssignals und einen Ausgangsstecker zum Senden des Spannungsausgangssignals umfasst, über die es an den Feldbus angeschlossen werden kann. Dabei ist vorzugsweise vorgesehen, dass am Eingangsstecker ein Feldbusabschnitt, über den das Spannungseingangssignal gesendet wird, und am Ausgangsstecker ein anderer Feldbusabschnitt gekoppelt ist, über den das erzeugte Spannungsausgangssignal gesendet wird. Dadurch ist es möglich, nicht unbedingt auf einen herstellungsspezifischen Typ von Feldgerät festgelegt zu sein, sondern Feldgeräte unterschiedlicher Hersteller im Messsystem funktional anzubinden.

Im Straßenbau lässt sich das erfindungsgemäße Messsystem besonders dann vorteilhaft einsetzen, wenn das Feldgerät ein Sensor oder ein Aktuator ist. Ist das Feldgerät als Sensor ausgebildet, kann es sich bei diesem beispielsweise um einen Nivellier- oder Materialflusssensor handeln. Ebenso gut könnte der Sensor jedoch auch als Ultraschallsinglesensor, Weitbereichssensor oder als mechanischer Sensor ausgebildet sein, um funktional im Messsystem vorteilhaft eingebunden zu werden.

Gemäß einer besonderen Ausführungsform der Erfindung ist vorgesehen, dass die Steuereinheit ein Außenbedienstand der Straßenbaumaschine ist. Mittels des Außenbedienstandes kann ein Bediener während des Einbaus einer neuen Oberflächenbefestigung die im Messsystem angeschlossenen Feldgeräte abrufen und/oder ansteuern, sodass beim Einbau eine zeitechte Einbaukontrolle möglich ist, wodurch gegebenenfalls auf Unregelmäßigkeiten im Einbau der Oberflächenbefestigung schnell reagiert werden kann.

Außerdem wäre es auch möglich, dass das Messsystem derart funktional mit vorzugsweise zum Einbau vorgesehenen Stellgliedern der Straßenbaumaschine verbunden ist, dass eine Einstellung dieser in Abhängigkeit der erfassten Messungen durch die Feldgeräte des Messsystems geschieht. Dies ermöglicht eine automatische Regelung der Stellglieder der Straßenbaumaschine basierend auf den erfassten Istwerten durch die Feldgeräte. Dadurch kann beispielsweise auf Unebenheiten im Planum während des Einbaus der Oberflächenbefestigung reagiert werden, indem automatisch eine Positionsregelung der Einbaubohle des Straßenfertigers stattfindet.

Die Erfindung betrifft auch ein Verfahren zur Adressierung mindestens eines Feldgeräts in einem Messsystem einer Straßenbaumaschine. Dabei wird das Feldgerät mittels eines Feldbusses mit einer Steuereinheit des Messsystems verbunden, wobei die Steuereinheit an einen Spannungseingang des Feldgeräts ein Spannungseingangssignal sendet, auf dessen Größe basierend eine exklusive Busadresse dem Feldgerät zugeteilt wird. Erfindungsgemäß ist vorgesehen, dass das Feldgerät anhand einer Größe des Spannungseingangssignals ein um eine Offset-Spannung differierendes Spannungsausgangssignal erzeugt, das von einem Spannungsausgang des Feldgeräts über den Feldbus an einen Spannungseingang eines weiteren Feldgeräts gesendet wird. Dadurch ist es möglich, dass basierend auf dem vom Feldgerät ausgegebenen Spannungsausgangssignal für das weitere Feldgerät ebenfalls eine exklusive Busadresse im Messsystem vergeben wird.

Gemäß der Erfindung wird der Spannungsausgang eines Feldgeräts mit dem Spannungseingang eines anderen Feldgeräts gekoppelt, sodass bei einer Aneinanderreihung mehrerer Feldgeräte durch das durchgeführte Offset mittels der jeweiligen Feldgeräte das Spannungseingangssignal von Feldgerät zu Feldgerät stufenweise zunimmt. Basierend auf den größer werdenden Spannungseingangssignalen können die Feldgeräte jeweils für sich eine individuelle Busadresse herstellen, über die eine zuverlässige Kommunikation mit der Steuereinheit aufgebaut werden kann.

Durch das erfindungsgemäße Verfahren ist es möglich, ein flexibles Messsystem situationsbedingt, insbesondere für den Gebrauch an einer Straßenbaumaschine, aufzubauen. Bisher bekannte Steckerleisten, die an der Steuereinheit vorgesehen waren, um eine begrenzte Anzahl von Sensoren an der Steuereinheit funktional anzubinden, sind nicht mehr nötig. Ebenfalls verhindert es das erfindungsgemäße Messsystem und Verfahren, dass das Bedienpersonal Feldgeräte falsch an der Steuereinheit anschließt beziehungsweise Steckerplätze falsch belegt werden.

Eine Ausführungsform der Erfindung wird anhand der nachfolgend beschriebenen Figuren genauer erläutert. Dabei zeigen
- Figur 1: eine Ausführungsform eines erfindungsgemäßen Messsystems und
- Figur 2: ein Schaltplan eines erfindungsgemäßen Messsystems.

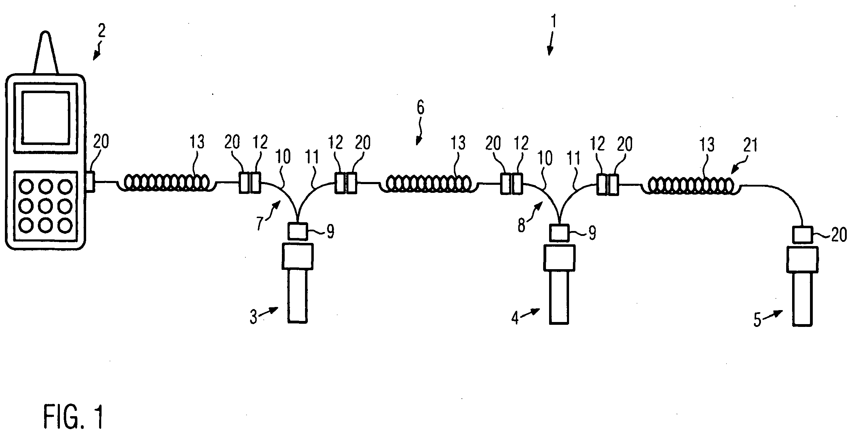

Die Figur 1 zeigt ein Messsystem 1 gemäß einer Ausführungsform der Erfindung. Das Messsystem 1 umfasst eine Steuereinheit 2, die gemäß der Figur 1 als Außenbedienstand ausgebildet ist.

Als Feldgeräte umfasst das Messsystem 1 einen ersten Sensor 3, einen zweiten Sensor 4 und einen dritten Sensor 5. Sämtliche Sensoren 3, 4, 5 sind mittels eines Feldbusses 6 funktional in Reihe mit der Steuereinheit 2 verbunden. Über den Feldbus 6 kann die Steuereinheit 2 mit den Sensoren 3, 4, 5 kommunizieren, sodass erfasste Messwerte durch die Sensoren 3, 4, 5 an die Steuereinheit 2 übertragbar sind und von dieser weiterverarbeitet werden können.

Gemäß dieser Ausführungsform der Erfindung umfasst der Feldbus 6 einen ersten Y-Verteiler 7 und einen zweiten Y-Verteiler 8. Der erste Y-Verteiler 7 verbindet den ersten Sensor 3 mit dem Feldbus 6 und der zweite Y-Verteiler 8 verbindet den zweiten Sensor 4 mit dem Feldbus 6. Das erfindungsgemäße Messsystem ist allerdings nicht auf den ersten und den zweiten Y-Verteiler 7, 8 begrenzt, sondern kann je nach Anzahl der im Messsystem benutzten Sensoren durch weitere Y-Verteiler erweitert werden.

Die Y-Verteiler 7, 8 umfassen jeweils einen Sensoranschluss 9, der mit dem jeweiligen Sensor 3, 4, 5 koppelbar ist, um den jeweiligen Sensor 3, 4, 5 über den dazugehörigen Y-Verteiler 7, 8 an den Feldbus 6 funktional anzuschließen.

Vom jeweiligen Y-Verteiler 7, 8 erstreckt sich jeweils ein erster und ein zweiter Verbinderabschnitt 10, 11, um den jeweiligen Y-Verteiler 7, 8 im Feldbus 6 anzuschließen. Die beiden Y-Verteiler 7, 8 sind jeweils über den Sensoranschluss 9 an die Sensoren 3, 4 gekoppelt. Beim Sensoranschluss 9 lauft jeweils ein Ende des ersten und des zweiten Verbinderabschnitts 10, 11 zusammen. An einem anderen Ende des ersten und zweiten Verbinderabschnitts 10, 11 ist jeweils ein Verteilerstecker 12 vorgesehen, der den jeweiligen Y-Verteiler 7, 8 an einen Kabelabschnitt 13 eines Wendelkabels 21 des Feldbusses 6 koppelt. Zur Kopplung der jeweiligen Verteilerstecker 12 umfassen die Wendelkabelabschnitte 13 Kabelstecker 20, die jeweils an den Enden der Wendelkabelabschnitte 13 ausgebildet sind. Diese sind dazu ausgebildet, funktional an den Verteilersteckern 12, den Sensoren 3, 4, 5 und der Steuereinheit 2 angeschlossen zu werden. Ebenso ist es möglich, die Kabelstecker 20 so auszubilden, dass sie miteinander funktional verbindbar sind, um beispielsweise einen Feldbusabschnitt zu bilden.

Die Sensoren 3, 4 sind mittels der Y-Verteiler 7, 8 an den Feldbus 6 angeschlossen, während der dritte Sensor 5 direkt an einen Kabelstecker 20 des Wendelkabelabschnitts 13 angeschlossen ist. Gemeinsam sind die Sensoren 3, 4, 5 in Reihe funktional an die Steuereinheit 2 angeschlossen.

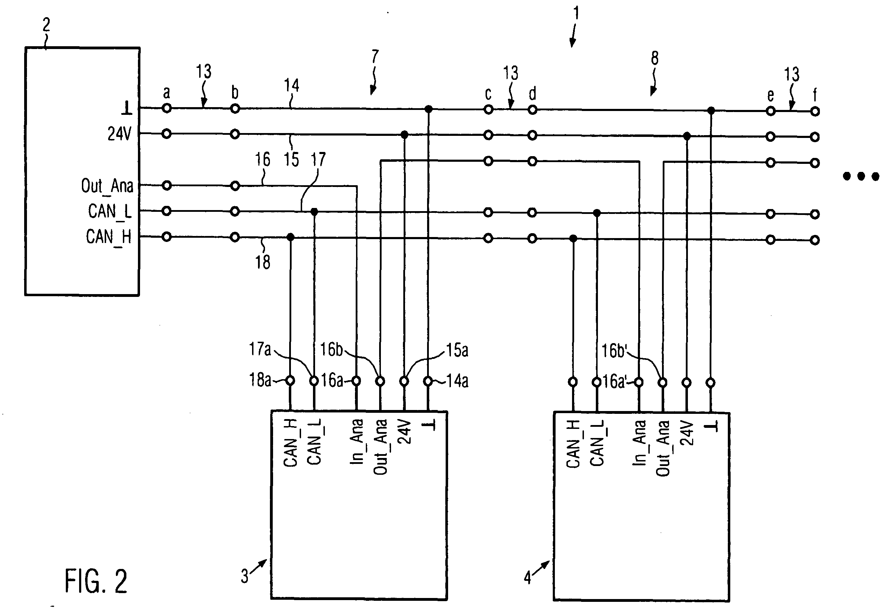

Die Figur 2 zeigt einen schematischen Schaltplan des erfindungsgemäßen Messsystems 1. Der erste und der zweite Sensor 3, 4 sind über den ersten und den zweiten Y-Verteiler 7, 8 jeweils an die Kabelabschnitte 13 des Feldbusses 6 angeschlossen und über diesen mit der Steuereinheit 2 verbunden.

Gemäß der Figur 2 sind im Feldbus 6 insgesamt sechs Schnittstellen a, b, c, d, e und f schematisch dargestellt. Zwischen den Schnittstellen a und b, c und d sowie e und f ist jeweils der Kabelabschnitt 13 ausgebildet. Die Schnittstellen a, b, c, d, e und f stellen in der Figur 2 die Verbindungen zwischen den Kabelsteckern 20 mit den Verteilersteckern 12 schematisch dar, die in der Figur 1 gezeigt werden.

Zwischen den Schnittstellen b und c befindet sich der erste Y-Verteiler 7 und zwischen den Schnittstellen d und e der zweite Y-Verteiler 8. Im schematischen Schaltplan gemäß der Figur 2 sind lediglich der erste und der zweite Sensor 3, 4 an den Feldbus 6 angeschlossen. Dies soll jedoch für die Erfindung nicht einschränkend sein. Vielmehr ist es möglich, das Messsystem 1 beliebig zu erweitern.

Gemäß der Figur 2 umfasst der Feldbus 6 eine Erdungsleitung 14, eine Betriebsspannungsleitung 15, eine Spannungsleitung 16 zur Adressierung der Sensoren 3, 4, sowie eine erste und eine zweite Kommunikationsleitung 17, 18, die jeweils an den Sensoren 3, 4 angeschlossen sind und diese mit der Steuereinheit 2 funktional verbinden.

Die Erdungsleitung 14 ist an den Sensoren 3, 4 jeweils an einem Erdungseingang 14a angeschlossen. Die Betriebsspannungsleitung 15 ist an einen Betriebseingang 15a der Sensoren 3, 4 angeschlossen. Normalerweise liegt an der Betriebsspannungsleitung 15 eine Betriebsspannung von 24 Volt an.

Die Spannungsleitung 16 wird von den Sensoren 3, 4 verwendet, um sich jeweils eine exklusive Busadresse zu geben. Die Spannungsleitung 16 ist mit einem Spannungseingang 16a und mit einem Spannungsausgang 16b des ersten Sensors 3 verbunden, wobei mittels der Spannungsleitung 16 ein Spannungseingangssignal über den Spannungseingang 16a an den ersten Sensor 3 übertragbar ist, das durch eine Offset-Spannung in ein Spannungsausgangssignal geändert wird, welches über den Spannungsausgang 16b an den Feldbusabschnitt der Spannungsleitung 16 übertragbar ist, der zwischen den Sensoren 3 und 4 angeordnet ist. Somit ist es durch die Spannungsleitung 16 möglich, unterschiedliche Spannungspegel von Sensor zu Sensor zu übertragen.

Das vom ersten Sensor 3 über den Spannungsausgang 16b ausgegebene Spannungsausgangssignal ist für den zweiten Sensor 4 ein Spannungseingangssignal, welches um die zuvor erwähnte Offset-Spannung vom Spannungseingangssignal des ersten Sensors 3 differiert. Dadurch ist es für jeden der Sensoren 3, 4 möglich, seine individuelle Busadresse basierend auf unterschiedlichen Spannungseingangssignalen zu erzeugen, sodass eine eindeutige Adressierung der Sensoren 3, 4 innerhalb des Messsystems 1 geschieht.

Am Spannungseingang 16a lässt sich das von der Steuereinheit 2 ausgegebene Spannungseingangssignal, beispielsweise 0,5 Volt, abgreifen. Durch eine Offsetspannung von beispielsweise 0,5 Volt bekäme man dann am Spannungsausgang 16b des ersten Sensors 3 ein Spannungsausgangssignal von 1,0 Volt, das als Spannungseingangssignal am Spannungseingang 16a' des zweiten Sensors 4 abgreifbar ist. Basierend auf diesem Beispiel liegt am Spannungsausgang 16b' des zweiten Sensors 4 ein Spannungsausgangssignal von 1,5 Volt an.

Die Kommunikationsleitungen 17, 18 sind für einen Datentransfer zwischen der Steuereinheit 2 und den im Messsystem 1 angeschlossenen Sensoren 3, 4 vorgesehen. Über den Kommunikationsleitungen 17, 18 können die Sensoren 3, 4 auch bidirektional mit der Steuereinheit 2 kommunizieren. Zum Anschluß der Kommunikationsleitungen 17, 18 sind an den Sensoren 3, 4 jeweils Kommunikationsanschlüsse 17a, 18a vorgesehen.

Gemäß dem schematischen Schaltplan kann das Messsystem 1 beliebig um weitere Sensoren erweitert werden. Die Sensoren 3, 4, die Kabelabschnitte 13 sowie die Y-Verteiler 7, 8 können modulartig zusammengebaut werden, sodass unterschiedliche Varianten des Messsystems 1 entstehen können.

## Patentansprüche

1. Straßenbaumaschine, insbesondere Straßenfertiger, mit einem Messsystem (1) für die Straßenbaumaschine, wobei das Messsystem (1) eine Steuereinheit (2) umfasst, die mittels eines Feldbusses (6) mit zumindest einem Feldgerät (3, 4, 5) funktional verbunden ist, wobei das Feldgerät (3, 4, 5) einen Spannungseingang (16a) und einen Spannungsausgang (16b) umfasst, wobei von der Steuereinheit (2) über den Feldbus (6) ein Spannungseingangssignal an den Spannungseingang (16a) des Feldgeräts (3, 4, 5) sendbar ist, wobei basierend auf einer Größe des Spannungseingangssignals eine exklusive Busadresse dem Feldgerät (3, 4, 5) zuteilbar ist,
**dadurch gekennzeichnet,**
**dass** das Feldgerät (3, 4, 5) dazu ausgebildet ist, aus dem Spannungseingangssignal ein um eine Offset-Spannung vergrößertes Spannungsausgangssignal zu erzeugen, das vom Spannungsausgang (16b) des Feldgeräts (3, 4, 5) über den Feldbus an einen Spannungseingang (16a) eines weiteren Feldgeräts (3, 4, 5) sendbar ist, sodass basierend auf dem vom Feldgerät (3, 4, 5) ausgegebenen Spannungsausgangssignal für das weitere Feldgerät eine andere exklusive Busadresse im Messsystem (1) vergebbar ist.

2. Straßenbaumaschine nach Anspruch 1, **dadurch gekennzeichnet, dass** der Spannungseingang (16a) ein analoger Spannungseingang mit einem Wertebereich von 0 bis 20 Volt ist.

3. Straßenbaumaschine nach Anspruch 1 oder 2, **dadurch gekennzeichnet, dass** der Spannungsausgang (16b) ein analoger Spannungsausgang mit einem Wertebereich von 0 bis 20 Volt ist.

4. Straßenbaumaschine nach einem der vorigen Ansprüche, **dadurch gekennzeichnet, dass** die Offset-Spannung ein ganzzahliges Vielfaches von 0,1 Volt beträgt, vornehmlich 0,5 Volt.

5. Straßenbaumaschine nach einem der vorigen Ansprüche, **dadurch gekennzeichnet, dass** eine Vergabe einer jeweiligen exklusiven Busadresse für die am Messsystem (1) angeschlossenen Feldgeräte (3, 4, 5) automatisch stattfindet.

6. Straßenbaumaschine nach einem der vorigen Ansprüche, **dadurch gekennzeichnet, dass** durch Anschließen eines jeden weiteren Feldgerätes an dem Feldbus (2) automatisch dem neu angeschlossenen Feldgerät (3, 4, 5) eine exklusive Busadresse zuteilbar ist.

7. Straßenbaumaschine nach einem der vorigen Ansprüche, **dadurch gekennzeichnet, dass** der Feldbus (6) mindestens teilweise als fliegende Verkabelung, vorzugsweise als Wendelkabel (21), ausgebildet ist.

8. Straßenbaumaschine nach einem der vorigen Ansprüche, **dadurch gekennzeichnet, dass** der Feldbus (6) ein digitaler Feldbus, vorzugsweise ein CAN-Bus, ist.

9. Straßenbaumaschine nach einem der vorigen Ansprüche, **dadurch gekennzeichnet, dass** mehrere Feldgeräte (3, 4, 5) lösbar mit dem Feldbus (6) verbunden werden können.

10. Straßenbaumaschine nach einem der vorigen Ansprüche, **dadurch gekennzeichnet, dass** mehrere Feldgeräte (3, 4, 5) in Reihe mittels des Feldbusses (6) funktional mit der Steuereinheit (2) verbunden werden können.

11. Straßenbaumaschine nach einem der vorigen Ansprüche, **dadurch gekennzeichnet, dass** das Feldgerät jeweils mittels eines Y-Verteilers (7, 8) an dem Feldbus (6) angeschlossen ist.

12. Straßenbaumaschine nach einem der Ansprüche 1 bis 10, **dadurch gekennzeichnet, dass** das Feldgerät jeweils einen Eingangsstecker zum Empfangen des Spannungseingangssignals und einen Ausgangsstecker zum Senden des Spannungsausgangssignäls umfasst, über die es an dem Feldbus (6) angeschlossen werden kann.

13. Straßenbaumaschine nach einem der vorigen Ansprüche, **dadurch gekennzeichnet, dass** das Feldgerät (3, 4, 5) ein Sensor oder ein Aktuator ist.

14. Straßenbaumaschine nach einem der vorigen Ansprüche, **dadurch gekennzeichnet, dass** die Steuereinheit (2) ein Außenbedienstand der Straßenbaumaschine ist.

15. Verfahren zur Adressierung mindestens eines Feldgeräts (3, 4, 5) in einem Messsystem
(1) einer Straßenbaumaschine, wobei das Feldgerät (3, 4, 5) mittels eines Feldbusses (6) mit einer Steuereinheit (2) des Messsystems (1) verbunden wird, wobei die Steuereinheit
(2) an einen Spannungseingang (16a) des Feldgeräts (3, 4, 5) ein Spannungseingangssignal sendet, auf dessen Größe basierend eine exklusive Busadresse dem Feldgerät (3, 4, 5) zugeteilt wird,
**dadurch gekennzeichnet, dass**
das Feldgerät anhand einer Größe des Spannungseingangssignals ein um eine OffsetSpannung vergrößertes Spannungsausgangssignal erzeugt, das von einem Spannungsausgang des Feldgeräts über den Feldbus an einen Spannungseingang eines weiteren Feldgeräts gesendet wird, sodass basierend auf dem vom Feldgerät ausgegebenen Spannungsausgangssignal für das weitere Feldgerät eine andere exklusive Busadresse im Messsystem vergeben wird.

## Claims

1. Road construction machine, in particular a road finishing machine, with a measuring system (1) for the road construction machine, wherein the measuring system (1) comprises a control unit (2) which is operationally connected using a field bus (6) to at least one field device (3, 4, 5), wherein said field device (3, 4, 5) comprises a voltage input (16a) and a voltage output (16b), where a voltage input signal is transmittable by said control unit (2) via said field bus (6) to said voltage input (16a) of said field device (3, 4, 5), wherein based on a magnitude of said voltage input signal, an exclusive bus address is assignable to said field device (3, 4, 5), **characterized in that** said field device (3, 4, 5) is adapted to generate from said voltage input signal a voltage output signal which is increased by an offset voltage and which is transmittable from said voltage output (16b) of said field device (3, 4, 5) via said fieldbus to a voltage input (16a) of a further field device (3, 4, 5), so that based on said voltage output signal outputted by said field device (3, 4, 5), a different exclusive bus address can be assigned in the measuring system (1) to the further field device.

2. Road construction machine according to claim 1, **characterized in that** said voltage input (16a) is an analog voltage input with a value range of 0 to 20 volts.

3. Road construction machine according to claims 1 or 2, **characterized in that** said voltage output (16b) is an analog voltage output with a value range of 0 to 20 volts.

4. Road construction machine according to one of the preceding claims, **characterized in that** said offset voltage is an integer multiple of 0.1 volts, in particular, 0.5 volts.

5. Road construction machine according to one of the preceding claims, **characterized in that** the assignment of a respective exclusive bus address for said field devices (3, 4, 5) connected to said measuring system (1) is performed automatically.

6. Road construction machine according to one of the preceding claims, **characterized in that** by connecting any additional field device to said fieldbus (2), an exclusive bus address is automatically assignable to said newly connected field device (3, 4, 5).

7. Road construction machine according to one of the preceding claims, **characterized in that** said field bus (6) is at least partially designed as cable-to-cable connection, preferably, as a spiral cable (21).

8. Road construction machine according to one of the preceding claims, **characterized in that** said field bus (6) is a digital field bus, preferably, a CAN-bus.

9. Road construction machine according to one of the preceding claims, **characterized in that** a plurality of field devices (3, 4, 5) can be detachably connected to said fieldbus (6).

10. Road construction machine according to one of the preceding claims, **characterized in that** a plurality of field devices (3, 4, 5) can by using said fieldbus (6) be operationally connected in series to said control unit (2).

11. Road construction machine according to one of the preceding claims, **characterized in that** said field device is with a Y-distributor (7, 8) respectively connected to said field bus (6).

12. Road construction machine according to claims 1 to 10, **characterized in that** said field device comprises each an input connector for receiving said voltage input signal and an output connector for transmitting said voltage output signal, via which it can be connected to said fieldbus (6).

13. Road construction machine according to one of the preceding claims, **characterized in that** said field device (3, 4, 5) is sensor or an actuator.

14. Road construction machine according to one of the preceding claims, **characterized in that** said control unit (2) is an external operating station of said road construction machine.

15. Method for addressing at least one field device (3, 4, 5) in a measuring system (1) of a road construction machine, wherein said field device (3, 4, 5) is connected via a field bus (6) with a control unit (2) of said measuring system (1), wherein said control unit (2) transmits a voltage input signal to the voltage input (16a) of said field device (3, 4, 5), based on the magnitude of which an exclusive bus address is allocated to said field device (3, 4, 5),
**characterized in that**
said field device, based on a magnitude of said voltage input signal, generates a voltage output signal which is increased by an offset voltage and is transmitted from a voltage output of said field device via said fieldbus to a voltage input of a further field device, so that a different exclusive bus address is assigned in said measuring system to said further field device based on said voltage output signal outputted by said field device.

## Revendications

1. Engin de travaux publics pour la construction de routes, notamment un finisseur de route, comprenant un système de mesure (1) pour l'engin de travaux publics, dans lequel le système de mesure (1) comprend une unité de commande (2), qui est reliée fonctionnellement au moyen d'un bus de terrain (6), à au moins un appareil de terrain (3, 4, 5),
dans lequel l'appareil de terrain (3, 4, 5) comprend une entrée de tension (16a) et une sortie de tension (16b), dans lequel l'unité de commande (2) peut envoyer, par l'intermédiaire du bus de terrain (6), un signal d'entrée de tension à l'entrée de tension (16a) de l'appareil de terrain (3, 4, 5), et
dans lequel en se basant sur une grandeur du signal d'entrée de tension, une adresse de bus exclusive peut être affectée à l'appareil de terrain (3, 4, 5), **caractérisé**
**en ce que** l'appareil de terrain (3, 4, 5) est conçu pour produire, à partir du signal d'entrée de tension, un signal de sortie de tension augmenté d'une tension d'offset, qui peut être envoyé de la sortie de tension (16b) de l'appareil de terrain (3, 4, 5), par l'intermédiaire du bus de terrain, à une entrée de tension (16a) d'un autre appareil de terrain (3, 4, 5), de sorte que, basé sur le signal de sortie de tension délivré par l'appareil de terrain (3, 4, 5), une autre adresse de bus exclusive dans le système de mesure (1) peut être attribuée au dit autre appareil de terrain (3, 4, 5).

2. Engin de travaux publics pour la construction de routes selon la revendication 1, **caractérisé en ce que** l'entrée de tension (16a) est une entrée de tension analogique présentant une plage de valeur de 0 à 20 Volt.

3. Engin de travaux publics pour la construction de routes selon la revendication 1 ou la revendication 2, **caractérisé en ce que** la sortie de tension (16b) est une sortie de tension analogique présentant une plage de valeur de 0 à 20 Volt.

4. Engin de travaux publics pour la construction de routes selon l'une des revendications précédentes, **caractérisé en ce que** la tension d'offset est un multiple entier de 0,1 Volt, de préférence 0,5 Volt.

5. Engin de travaux publics pour la construction de routes selon l'une des revendications précédentes, **caractérisé en ce qu'**une attribution d'une adresse de bus exclusive respective pour les appareils de terrain (3, 4, 5) raccordés au système de mesure (1), a lieu de manière automatique.

6. Engin de travaux publics pour la construction de routes selon l'une des revendications précédentes, **caractérisé en ce que** par le raccordement de chaque autre appareil de terrain au bus de terrain (2), une adresse de bus exclusive peut être automatiquement affectée à l'appareil de terrain (3, 4, 5) nouvellement raccordé.

7. Engin de travaux publics pour la construction de routes selon l'une des revendications précédentes, **caractérisé en ce que** le bus de terrain (6) est réalisé au moins partiellement en tant que câblage libre, de préférence en tant que câble torsadé (21).

8. Engin de travaux publics pour la construction de routes selon l'une des revendications précédentes, **caractérisé en ce que** le bus de terrain (6) est un bus de terrain numérique, de préférence un bus CAN.

9. Engin de travaux publics pour la construction de routes selon l'une des revendications précédentes, **caractérisé en ce que** plusieurs appareils de terrain (3, 4, 5) peuvent être reliés de manière amovible au bus de terrain (6).

10. Engin de travaux publics pour la construction de routes selon l'une des revendications précédentes, **caractérisé en ce que** plusieurs appareils de terrain (3, 4, 5) peuvent être reliés fonctionnellement, en série, au moyen du bus de terrain (6), à l'unité de commande (2).

11. Engin de travaux publics pour la construction de routes selon l'une des revendications précédentes, **caractérisé en ce que** l'appareil de terrain est raccordé, respectivement au moyen d'un répartiteur en Y (7, 8), au bus de terrain (6).

12. Engin de travaux publics pour la construction de routes selon l'une des revendications 1 à 10, **caractérisé en ce que** l'appareil de terrain comprend respectivement un connecteur d'entrée pour la réception du signal d'entrée de tension, et un connecteur de sortie pour l'envoi du signal de sortie de tension, par l'intermédiaire desquels il peut être raccordé au bus de terrain (6).

13. Engin de travaux publics pour la construction de routes selon l'une des revendications précédentes, **caractérisé en ce que** l'appareil de terrain (3, 4, 5) est un capteur ou un actionneur.

14. Engin de travaux publics pour la construction de routes selon l'une des revendications précédentes, **caractérisé en ce que** l'unité de commande (2) est un poste de commande extérieur de l'engin de travaux publics de construction de routes.

15. Procédé d'adressage d'au moins un appareil de terrain (3, 4, 5) dans un système de mesure (1) d'un engin de travaux publics pour la construction de routes, procédé d'après lequel on relie l'appareil de terrain (3, 4, 5), au moyen d'un bus de terrain (6), à une unité de commande (2) du système de mesure (1), et d'après lequel l'unité de commande (2) envoie à une entrée de tension (16a) de l'appareil de terrain (3, 4, 5), un signal d'entrée de tension sur la base duquel on affecte une adresse de bus exclusive à l'appareil de terrain (3, 4, 5),
**caractérisé en ce que**
l'appareil de terrain produit, à partir d'une grandeur du signal d'entrée de tension, un signal de sortie de tension augmentée d'une tension d'offset, qui est envoyé de la sortie de tension de l'appareil de terrain, par l'intermédiaire du bus de terrain, à une entrée de tension d'un autre appareil de terrain, de sorte que, basé sur le signal de sortie de tension délivré par l'appareil de terrain, une autre adresse de bus exclusive dans le système de mesure est attribuée au dit autre appareil de terrain.
